# EUROPEAN PATENT SPECIFICATION

(11) **EP 1 957 584 B1**
(45) Date of publication and mention of the grant of the patent: **20.05.2015**
(21) Application number: 06837258.0
(22) Date of filing: 10.11.2006
(51) Int. Cl.: C08L 83/04, E06B 3/66, C09J 183/04, C03C 27/10

(54) **INSULATED GLASS UNIT POSSESSING ROOM TEMPERATURE-CURED SILOXANE SEALANT COMPOSITION OF REDUCED GAS PERMEABILITY**
ISOLIERTE GLASEINHEIT MIT BEI RAUMTEMPERATUR GEHÄRTETER SILOXANDICHTUNGSMASSE MIT VERRINGERTER GASDURCHLÄSSIGKEIT
UNITE DE VITRAGE ISOLANT COMPRENANT UNE COMPOSITION DE PRODUIT DE SCELLEMENT AU SILOXANE DURCI A TEMPERATURE AMBIANTE ET A PERMEABILITE REDUITE AU GAZ

(30) Priority: 18.11.2005 US 283382
(43) Date of publication of application: 20.08.2008
(73) Proprietor: Momentive Performance Materials Inc., Waterford, NY 12188 (US)
(72) Inventor: LANDON, Shayne, J., Ballston Lake, NY 12091 (US); WILLIAMS, David, A., Ganesvoort, NY 12831 (US); KUMAR, Vikram, Bangalore 560 017 (IN); SHELUKAR, Sachin, A., Bangalore 560 093 (IN); NESAKUMAR, Edward, J., Bangalore 560 017 (IN); RAMAKRISHNAN, Indumathi, Bangalore 560 037 (IN)
(74) Representative: Laufhütte, Dieter
(86) International application number: PCT/US2006/043673
(87) International publication number: WO 2007/061642

(56) References cited:
- DE-A1- 4 136 689
- US-A1- 2005 028 459
- US-A1- 2005 192 387
- US-B1- 6 313 220

## Description

### FIELD OF THE INVENTION

This invention is generally related to thermally insulating structures, and more particularly to a high thermal efficiency, insulated glass unit structure sealed with room temperature cured compositions having reduced permeability to gas, or mixtures of gases.

### BACKGROUND OF THE INVENTION

Insulating glass units (IGU) commonly have two panels of glass separated by a spacer. The two panels of glass are placed parallel to each other and sealed at their periphery such that the space between the panels, or the inner space, is completely enclosed. The inner space is typically filled with air. The transfer of energy through an insulating glass unit of this typical construction is reduced, due to the inclusion of the insulating layer of air in the inner space, as compared to a single panel of glass. The energy transfer may be further reduced by increasing the separation between the panels to increase the insulating blanket of air. There is a limit to the maximum separation beyond which convection within the air between the panels can increase energy transfer. The energy transfer may be further reduced by adding more layers of insulation in the form of additional inner spaces and enclosing glass panels. For example three parallel spaced apart panels of glass separated by two inner spaces and sealed at their periphery. In this manner the separation of the panels is kept below the maximum limit imposed by convection effects in the airspace, yet the overall energy transfer can be further reduced. If further reduction in energy transfer is desired then additional inner spaces can be added.

Additionally, the energy transfer of sealed insulating glass units may be reduced by substituting the air in a sealed insulated glass window for a denser, lower conductivity gas. Suitable gases should be colorless, non-toxic, non-corrosive, non-flammable, unaffected by exposure to ultraviolet radiation, and denser than air, and of lower conductivity than air. Argon, krypton, xenon, and sulfur hexaflouride are examples of gases which are commonly substituted for air in insulating glass windows to reduce energy transfer.

Various types of sealants are currently used in the manufacture of insulated glass units including both curing and non-curing systems. Liquid polysulphides, polyurethanes and silicones represent curing systems, which are commonly used, while polybutylene-polyisoprene copolymer rubber based hot melt sealants are commonly used non-curing systems.

Liquid polysulphides and polyurethanes are generally two component systems comprising a base and a curing agent that are then mixed just prior to application to the glass. Silicones may be one component as well as two component systems. Two component systems require a set mix ratio, two-part mixing equipment and cure time before the insulating glass units can be moved onto the next manufacturing stage.

However, these sealant compositions are susceptible to permeability from the low conductivity energy transfer gases (e.g. argon) used to enhance the performance of insulated glass units. As a result of this permeability, the reduced energy transfer maintained by the gas between the panels of glass is lost over time.

There remains a need for sealants with superior barrier protection and even higher thermal insulation stability that overcomes the deficiencies described above, and is highly suitable for applications that are easy to apply and have excellent adhesion.

DE 41 36 689 A1 can be considered the closest prior art for the present invention. This document discloses sealant compositions which include a polydiorganosiloxane and a cross-linker. The gas permeability is lowered upon addition of a certain amount of mica particles to the composition.

### SUMMARY OF THE INVENTION

The present invention relates to an insulated glass unit with increased thermal insulation stability. Specifically, the present invention relates to an insulated glass unit comprising at least two spaced-apart sheets of glass in spaced relationship to each other, a low thermal conductivity gas therebetween and gas sealant element including a curable sealant composition comprised of a) diorganopolysiloxane exhibiting permeability to said gas; b) at least one polymer having a permeability to said gas that is less than the permeability of diorganopolysiloxane polymer; c) cross-linker; d) catalyst for the cross-linker reaction; and e) a filler which is a modified clay.

The curable sealant composition of the present invention advantageously provides for a 50 percent reduction in gas permeability and reduced moisture leakage, which provides longer service life of insulated glass units (IGU).

### BRIEF DESCRIPTION OF THE DRAWINGS

Fig. 1 is a sectional side view of a double glazed insulated glass unit (IGU).
Fig. 2 is a graph illustration of the permeability of Examples 1-3 to argon gas.
Fig. 3 is a graph illustration of the permeability of Example 5-7 to argon gas.
Fig. 4 is a graph illustration of percent decrease in permeability of Example 5-7 to argon gas.

### DETAILED DESCRIPTION OF THE INVENTION

The detailed embodiments of the present invention are disclosed herein. It should be understood, however, that the disclosed embodiments are merely exemplary of the invention, which may be embodied in various forms. Therefore, the details disclosed herein are not to be interpreted as limited, but merely as the basis for the claims and as a basis for teaching one skilled in the art how to make and/or use the invention.

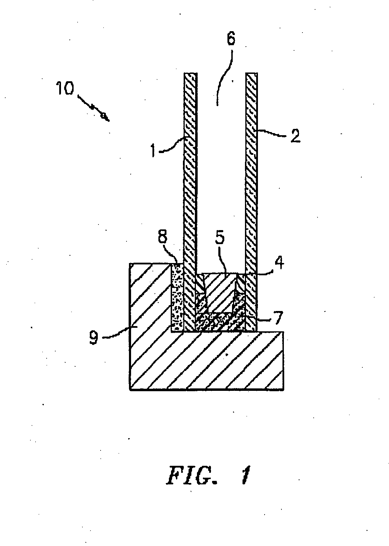

With reference to Fig. 1 an insulated glass unit 10 incorporating a curable sealant composition 7 providing separation of adjacent panes 1, 2 and sealing of the gas impermeable space 6 therebetween is shown. As those skilled in the art will readily appreciate, the inventive concepts of the present curable sealant composition 7 may be applied in various manners without departing from the spirit of the present invention. For example, it is contemplated that the present curable sealant composition may be used in conjunction with other materials, for example, various types of glass, including, clear float glass, annealed glass, tempered glass, solar glass, tinted glass, and Low-E glass, acrylic sheets and polycarbonate sheets.

In accordance with the present invention, the curable sealant composition 7 is applied in the construction of an insulated glass unit with a double pane glass structure. The insulated glass unit, therefore, generally includes a first glass pane 1 and a second glass pane 2 separated by a continuous spacer 5, a primary sealant 4, and curable sealant composition 7 positioned between the first glass pane 1 and the second glass pane 2. The use of curable sealant composition 7 in accordance with the present invention provides improved gas barrier characteristics and moisture leakage characteristics. As a result, the curable sealant composition 7 provides for longer in service performance of insulated glass units.

The dimensions of continuous spacer 5 will determine the size of the gas impermeable space 6 formed between the first glass 1 and second glass 2 when the sheets of glass are sealed to spacer 5 using primary sealant 1 and curable sealant composition 7 of the present invention. A glazing bead 8, as known in the art, is placed between glass sheets 1 and 2 and window frame 9.

The spacer 5 may be filled with a desiccant that will keep the sealed interior of the gas impermeable space 6 of the insulated glass unit dry. The desiccant should be one which will not adsorb the low thermal conductivity gas or other gases used if a gas mixture is used to fill the interior of the insulated glass unit.

The primary sealant 4 of the insulated glass unit may be comprised of polymeric materials as known in the art. For example, rubber base material, such as polyisobutylene, butyl rubber, polysulfide, EPDM rubber nitrile rubber, or the like. Other materials include, but are not limited to, compounds comprising polyisobutylene/polyisoprene copolymers, polyisobutylene polymers, brominated olefin polymers, copolymers of polisobutylene and para-methylstyrene, copolymers of polyisobutylene and brominated para-methylstyrene, butyl rubber-copolymer of isobutylene and isoprene, ethylene-propylene polymers, polysulfide polymers, polyurethane polymers, and styrene butadiene polymers.

As recited above, the primary sealant 4 can be fabricated of a material such as polyisobutylene, which has very good sealing properties. The glazing bead 8 is a sealant that is sometimes referred to as the glazing bedding and may be in the form of a silicone or butyl. A desiccant may be built into the continuous spacer 5 and is intended to remove moisture from the insulated glass or gas impermeable space between glass pane 1 and glass pane 2.

The curable sealant composition 7 of the present invention comprises diorganopolysiloxane polymer or blend thereof and at least one additional polymer. A general description of each of the components of the formulation are given as follows:
a diorganopolysiloxane or blend of diorganopolysiloxanes exhibiting permeability to a gas or mixtures of gases wherein the silicon atom at each polymer chain end is silanol terminated; whereby the viscosity of the siloxanes can be from about 1,000 to 200,000 cps at 25°C;
a polymer exhibiting permeability to a gas or mixture of gases that is less than the permeability of diorganopolysiloxane polymer (a);
an alkylsilicate cross-linker of the general formula: (R¹⁴O)(R¹⁵O)(R¹⁶O)(R¹⁷O)Si;
a catalyst useful for facilitating crosslinking in silicone sealant compositions;
a filler which is a modified clay.

The sealant composition of the present invention may further comprise an optional component, such as, adhesion promoter, non-ionic surfactant, and the like and mixtures thereof.

The silanol terminated diorganopolysiloxane polymer (a), generally has the formula:

MₐD_{b}D'_{c}

with the subscript a = 2 and b equal to or greater than 1 and with the subscript c zero or positive where

M = (HO)_{3-x-y}R₁ₓR_{2y}SiO_{1/2};

with the subscript x = 0, 1 or 2 and the subscript y is either 0 or 1, subject to the limitation that x + y is less than or equal to 2, where R¹ and R² are independently chosen monovalent C1 to C60 hydrocarbon radicals; where

D = R³R⁴SiO_{2/2};

where R³ and R⁴ are independently chosen monovalent C1 to C60 hydrocarbon radicals; where

D' = R⁵R⁶SiO_{2/2};

where R⁵ and R⁶ are independently chosen monovalent C1 to C60 hydrocarbon radicals.

In one embodiment of the invention, the level of incorporation of the diorganopolysiloxane wherein the silicon atom at each polymer chain end is silanol terminated (a) ranges from about 50 weight percent to about 99 weight percent of the total composition, hi another embodiment of the invention, the level of incorporation of the diorganopolysiloxane polymer or blends of diorganopolysiloxane polymers (a) ranges from about 60 weight percent to about 95 weight percent of the total composition. hi yet another embodiment of the present invention, the diorganopolysiloxane polymer or blends of diorganopolysiloxane polymers (a) ranges from about 65 weight percent to about 95 weight percent of the total composition.

The curable sealant composition 7 of the present invention further comprises at least one polymer (b) exhibiting permeability to a gas or mixture of gases that is less than the permeability of diorganopolysiloxane polymer (a).

The polymers (b) exhibiting permeability to a gas or mixture of gases that is less than the permeability of diorganopolysiloxane polymer (a) are selected from the group consisting of low density polyethylene (LDPE), very low density polyethylene (VLDPE), linear low density polyethylene (LLDPE) and high density polyethylene (HDPE); polypropylene (PP), polyisobutylene (PIB), polyvinyl acetate(PVAc), polyvinyl alcohol (PVOH), polystyrene, polycarbonate, polyester, such as, polyethylene terephthalate (PET), polybutylene terephthalate (PBT), polyethylene napthalate (PEN), glycol-modified polyethylene terephthalate (PETG); polyvinylchloride (PVC), polyvinylidene chloride, polyvinylidene floride, thermoplastic polyurethane (TPU), acrylonitrile butadiene styrene (ABS), polymethylmethacrylate (PMMA), polyvinyl fluoride (PVF), Polyamides (nylons), polymethylpentene, polyimide (PI), polyetherimide (PEI), polyether ether ketone (PEEK), polysulfone, polyether sulfone, ethylene chlorotrifluoroethylene, polytetrafluoroethylene (PTFE), cellulose acetate, cellulose acetate butyrate, plasticized polyvinyl chloride, ionomers (Surtyn), polyphenylene sulfide (PPS), styrene-maleic anhydride, modified polyphenylene oxide (PPO), ethylene- propylene rubber (EPDM), polybutadiene, polychloroprene, polyisoprene, polyurethane (TPU), styrene-butadiene-styrene (SBS), styrene-ethylene-butadiene-styrene (SEEBS), polymethylphenyl siloxane (PMPS), and mixtures thereof.

These polymers can be blended either alone or in combinations or in the form of coplymers, e.g. polycarbonate- ABS blends, polycarbonate polyester blends, grafted polymers such as, silane grafted polyethylenes, and silane grafted polyurethanes.

In one embodiment of the present invention, the curable sealant composition 7 has a polymer selected from the group consisting of low density polyethylene (LDPE), very low density polyethylene (VLDPE), linear low density polyethylene (LLDPE), high density polyethylene (HDPE), and mixtures thereof. In another embodiment of the invention, the curable sealant composition has a polymer selected from the group consisting of low density polyethylene (LDPE), very low density polyethylene (VLDPE), linear low density polyethylene (LLDPE), and mixture thereof. In yet another embodiment of the present invention, the curable sealant composition polymer is linear low density polyethylene (LLDPE).

In one embodiment of the present invention, the curable sealant composition contains from about 50 to about 99 weight percent diorganopolysiloxane polymer and from about 1 to about 50 weight percent polymer (b). In another embodiment of the present invention, the curable sealant composition contains from about 60 to about 95 weight percent diorganopolysiloxane polymer and from about 5 to about 40 weight percent polymer (b). In yet another embodiment of the present invention, the curable sealant composition contains from about 65 to about 95 weight percent diorganopolysiloxane polymer and from about 5 to about 35 weight percent polymer (b).

The blending method of diorganopolysiloxane polymer (a) with polymer (b) may be performed by those methods know in the art, for example, melt blending, solution blending or mixing of polymer powder component (b) in diorganopolysiloxane polymer (a).

Suitable cross-linkers (c) for the siloxanes of the curable sealant composition may include an alkylsilicate of the general formula:

(R¹⁴O)(R¹⁵O)(R¹⁶O)(R¹⁷O)Si

where R¹⁴, R¹⁵, R¹⁶ and R¹⁷ are independently.chosen monovalent C1 to C60 hydrocarbon radicals.

Crosslinkers useful herein include, but are not limited to, tetra-N-propylsilicate (NPS), tetraethylortho silicate and methyltrimethoxysilane and similar alkyl substituted alkoxysilane compostions, and the like.

In one embodiment of the present invention, the level of incorporation of the alkylsilicate (crosslinker) ranges from about 0.1 weight percent to about 10 weight percent. In another embodiment of the invention, the level of incorporation of the alkylsilicate (crosslinker) ranges from about 0.3 weight percent to about 5 weight percent. In yet another embodiment of the present invention, the level of incorporation of the alkylsilicate (crosslinker) ranges from about 0.5 weight percent to about 1.5 weight percent of the total composition.

Suitable catalysts (d) can be any of those known to be useful for facilitating crosslinking in silicone sealant compositions. The catalyst may include metal and non-metal catalysts. Examples of the metal portion of the metal condensation catalysts useful in the present invention include tin, titanium, zirconium, lead, iron cobalt, antimony, manganese, bismuth and zinc compounds.

In one embodiment of the present invention, tin compounds useful for facilitating crosslinking in curable sealant compositions include: tin compounds such as dibutyltindilaurate, dibutyltindiacetate, dibutyltindimethoxide, tinoctoate, isobutyltintriceroate, dibutyltinoxide, solubilized dibutyl tin oxide, dibutyltin bis- diisooctylphthalate, bis-tripropoxysilyl dioctyltin, dibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, and tinbutyrate, and the like. In still another embodiment, tin compounds useful for facilitating crosslinking in the curable sealant composition are chelated titanium compounds, for example, 1,3-propanedioxytitanium bis(ethylacetoacetate); di- isopropoxytitanium bis(ethylacetoacetate); and tetra-alkyl titanates, for example, tetra n-butyl titanate and tetraisopropyl titanate. In yet another embodiment of the present invention, diorganotin bis β-diketonates is used for facilitating crosslinking in the curable sealant composition.

In one aspect of the present invention, the catalyst is a metal catalyst. In another aspect of the present invention, the metal catalyst is selected from the group consisting of tin compounds, and in yet another aspect of the invention, the metal catalyst is solubilized dibutyl tin oxide.

In one embodiment of the present invention, the level of incorporation of the catalyst, ranges from about 0.001 weight percent to about 1 weight percent of the total composition. In another embodiment off the invention, the level of incorporation of the catalyst, ranges from about 0.003 weight percent to about 0.5 weight percent of the total composition. In yet another embodiment of the present invention, the level of incorporation of the catalyst, ranges from about 0.005 weight percent to about 0.2 weight percent of the total composition.

The curable sealant composition of the present invention may further comprises an alkoxysilane or blend of alkoxysilanes as an adhesion promoter. In one embodiment, the adhesion promoter may be a combination blend of n-2-aminoethyl-3-aminopropyltrimethoxysilane and 1,3,5-tris(trimethoxysilylpropyl)isocyanurate. Other adhesion promoters useful in the present invention include but are not limited to n-2-aminoethyl-3-aminopropyltriethoxysilane, γ-aminopropyltriethoxysilane, γ-aminopropyltrimethoxysilane, aminopropyltrimethoxysilane, bis-γ-trimethoxysilypropyl)amine, N-Phenyl-γ-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3,-dimethylbutyltrimethoxysilane, and n-ethyl-3-trimethoxysilyl-2- methylpropanamine, and the like.

The level of incorporation of the alkoxysilane (adhesion promoter) ranges from about 0.1 weight percent to about 20 weight percent. In one embodiment of the invention, the adhesion promoter ranges from about 0.3 weight percent to about 10 weight percent of the total composition. In another embodiment of the invention, the adhesion promoter ranges from about 0.5 weight percent to about 2 weight percent of the total composition.

The curable sealant composition of the present invention also comprises a filler e) which is an Organo-Clay derived from an inorganic substance from the general class of so called "nano-clays" or "clays." "Organo-clays" are clays or other layered materials that have been treated with organic molecules (also called exfoliating agents) capable of undergoing ion exchange reactions with the cations present at the interlayer surfaces of the layers.

In one embodiment of the invention, the clay materials used herein include natural or synthetic phyllosilicates, particularly smectic clays such as montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, talc, mica, kaolinite,as well as vermiculite, halloysite, aluminate oxides, or hydrotalcite, and the like and mixtures thereof. In another embodiment, other useful layered materials include micaceous minerals, such as illite and mixed layered illite/smectite minerals, such as rectorite, tarosovite, ledikite and admixtures of illites with the clay minerals named above. Any swellable layered material that sufficiently sorbs the organic molecules to increase the interlayer spacing between adjacent phyllosilicate platelets to at least 5 angstroms, or to at least 10 angstroms, (when the phyllosilicate is measured dry) may be used in the practice of this invention.

The aforementioned particles can be natural or synthetic such as smectite clay. This distinction can influence the particle size and for this invention, the particles should have a lateral dimension of between 0.01 µm and 5 µm, and preferably between 0.05 µm and 2 µm, and more preferably between 0.1 µm and 1 µm. The thickness or the vertical dimension of the particles can vary between 0.5 nm and 10 nm, and preferably between 1 nm and 5 nm.

Organic and inorganic compounds useful for modifying the clays include cationic surfactants such as ammonium, alkylammonium, (primary, secondary, tertiary and quaternary), phosphonium or sulfonium derivatives of aliphatic, aromatic or arylaliphatic amines, phosphines or sulfides. Such organic molecules are among the "surface modifiers" or "exfoliating agents" discussed herein. Additional organic or inorganic molecules useful for treating the clays and layered materials include amine compounds (or the corresponding ammonium ion) with the structure R³R⁴R⁵N, wherein R³, R⁴, and R⁵ are C₁ to C₃₀ alkyls or alkenes in one embodiment, C₁ to C₂₀ alkyls or alkenes in another embodiment, which may be the same or different. In one embodiment, the organic molecule is a long chain tertiary amine where R³ is a C₁₄ to C₂₀ alkyl or alkene. In another embodiment, R⁴ and or R⁵ may also be a C₁₄ to C₂₀ alkyl or alkene. In yet another embodiment of the present invention, the modifier can be an amine with the structure R⁶R⁷R⁸N, wherein R⁶, R⁷, and R⁸ are C₁ to C₃₀ alkoxy silanes or combination of C₁ to C₃₀ alkyls or alkenes and alkoxy silanes.

Suitable clays that are modified to form organo-clays include, but are not limited to, montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, vermiculite, halloysite, aluminate oxides, hydrotalcite, illite, rectorite, tarosovite, ledikite, and mixtures thereof. The organo-clays of the present invention may further comprise one or more of ammonium, primary alkylammonium, secondary alkylammonium, tertiary alkylammonium quaternary alkylammonium, phosphonium derivatives of aliphatic, aromatic or arylaliphatic amines, phosphines or sulfides or sulfonium derivatives of aliphatic, aromatic or arylaliphatic amines, phosphines or sulfides. In one embodiment of the present invention, the organo-clay is an alkyl ammonium modified montmorillonite.

The amount of clay incorporated in the sealant composition of the present invention in accordance with embodiments of the invention, is preferably an effective amount to provide decrease the sealant's permeability to gas. In one embodiment of the present invention, the sealant composition of the present invention contains from 0 to about 50 weight percent nano-clay. In another embodiment, the compositions of the present invention have from about 1 to about 20 weight percent nano-clay.

The curable sealant composition of the present invention may optionally comprise non-ionic surfactant compound selected from the group of surfactants consisting of polyethylene glycol, polypropylene glycol, ethoxylated castor oil, oleic acid ethoxylate, alkylphenol ethoxylates, copolymers of ethylene oxide (EO) and propylene oxide (PO) and copolymers of silicones and polyethers (silicone polyether copolymers), copolymers of silicones and copolymers of ethylene oxide and propylene oxide and mixtures thereof in an amount ranging from slightly above 0 weight percent to about 10 weight percent, more preferably from about 0.1 weight percent to about 5 weight percent, and most preferably from about 0.5 weight percent to about 0.75 weight percent of the total composition.

The curable sealant composition of the present invention may be prepared using other ingredients that are conventionally employed in room temperature vulcanizing (RTV) silicone compositions such as colorants, pigments and plasticizers, as long as they do not interfere with the desired properties.

Furthermore, these compositions can be prepared using melt, solvent and in-situ polymerization of siloxane polymers as known in the art.

Preferably, the methods of blending the diorganopolysiloxane polymers with polymers may be accomplished by contacting the components in a tumbler or other physical blending means, followed by melt blending in an extruder. Alternatively, the components can be melt blended directly in an extruder, Brabender or any other melt blending means.

Curable sealant compositions are illustrated by the following comparative examples.

Polydimethyl Siloxane (PDMS) mixture (Silanol 5000 and silanol 50000, Gelest), was melt blended with LLDPE (melt flow index (MFI) 20, from Sabic) by Hake internal mixer at 150°C, 200RPM, for total mixing time of 12 minutes. Three (3) such blends were prepared with weight percent LLDPE of 10, 20 and 30, (see Example 1, 2 and 3, respectively, listed below), by the following procedure:
Mix silanols 5000 cPs and 50000 cPs in 1:1 ratio.
Add 70 percent of silanol mixture into the Hake mixer @ 150°C
Start the experiment using program window.
Add LLDPE to the mixer in small amounts. Time of addition 1-2 minutes.
Add remaining mixture 30 percent of silanol into the mixer.
Continue mixing for total of 12 minutes.

At the end of 12th minute the rotation stops automatically, collect the blended material into a glass petridish.

The following Examples were prepared from the batches obtained using above procedure:
Example 1: 52 grams mix silanol (5000 and 50000 @ 50:50) + 6 grams LLDPE
Example 2: 48 grams mix silanol (5000 and 50000 @ 50:50) + 12 grams LLDPE
Example 3: 42 grams mix silanol (5000 and 50000 @ 50:50) + 18 grams LLDPE

Example 1, 2 and 3, were then used to make cured sheets as follows:
PDMS-LLDPE blends were mixed with n-propyl silicate (cross-linker, obtained from Gelest Chemicals, USA) and solubilized dibutyl tin oxide (DBTO)(catalyst, obtained from GE silicones, Waterford, USA), in amounts as shown in Table 1, using a hand blender for 5-7 minutes. Air bubbles were removed by vacuum and the mixture was poured in Teflon mould and kept for 24 hrs under ambient conditions (25° C and 50 percent humidity). The cured sheets were removed from mould after 24 hours and kept at ambient temperature for seven days for complete curing.

**Table 1**

| Examples | Amount (Grams) | nPs ml | DBTO ml |
|---|---|---|---|
| Comparative Example 1 Silanol Mixture | 50 | 1 | 0.06 |
| Example 1 Silanol with 10wtpercent LLDPE | 50 | 0.9 | 0.05 |
| Example 2 Silanol with 20wtpercent LLDPE | 50 | 0.72 | 0.04 |
| Example 3 Silanol with 30wtpercent LLDPE | 50 | 0.5 | 0.03 |

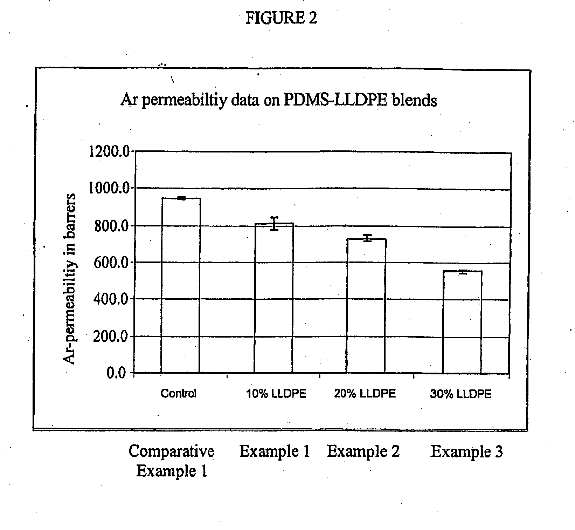

The Argon permeability of Examples 1-3 and Example 1 was measured using a gas permeability set-up. The measurements were based on the variable-volume method at 100 PSI pressure and temperature of 25°C. Measurements were repeated under identical conditions for 2-3 times in order to ensure their reproducibility. The result of the permeability data is displayed in Figure 2.

The variable-volume method as displayed in Figure 2 measures Argon (Ar) permeability in "barrer" units (0.0 to 1200.0). As shown in Table 2, Examples 1-3 displayed lowered Ar permeability relative to the Comparative Example 1.

Examples 5, 6 and 7 were prepared as follows:
Polydimethyl Siloxane (PDMS) mixture (Silanol 3000 and silanol 30000, GE silicones), was melt blended with LLDPE (melt flow index (MFI) 20, from Sabic) in an extruder at 150°C, along with the mixture of Hakenuka TDD CaCO₃ and Omya FT CaCO₃. The temperature settings of the barrel are given below in Table 2.

Comparative Example 4 was prepared as follows:
Polydimethyl Siloxane (PDMS) mixture (Silanol 3000 and silanol 30000, GE silicones), was melt blended in an extruder at 150°C, along with the mixture of Hakenuka TDD CaCO₃ and Omya FT CaCO₃. The temperature settings of the barrel are given below in Table 2:

**Table 2**

| Temp settings: | |
|---|---|
| Barrel 1-2 | 75°C |
| Barrel 3-10 | 150°C |
| Barrel 11-15 | cooling to 45°C |

The feed rate was set at 501 bs/hr. The formulations of Examples 4, 5, 6 and 7 are displayed in Table 4 and were produced in an extruder at 150°C:

**Table 4**

| | Silanol | Silanol | CaCO3 | Sabic | Talc |
|---|---|---|---|---|---|
| Examples | 3000cps | 30000 | (50:50 mixture of Hakenuka TDD and Omya FT | LLDPE | |
| Comparative Example 4 | 25.0 | 25.0 | 50.0 | - | - |
| Example 5 | 22.7 | 22.7 | 50.0 | 4.7 | - |
| Example 6 | 20.0 | 20.0 | 50.0 | 10.0 | - |
| Example 7 | 20.0 | 20.0 | 25.0 | 10.0 | 25 |

The extruded material was collected in 6oz semco cartridges.

Comparative Example 4, and Examples 5, 6, and 7 were then used to make cured sheets as follows:
PDMS-LLDPE blends were mixed with Part B (catalyst mixture consists of solubilized dibutyl tin oxide, n-propyl silicate, aminopropyl triethoxysilane, carbon black and silicone oil ) in 12.5:1 ratio in semkit mixer for 6 minutes. The mixture was then poured in Teflon mould and kept for 24 hrs under ambient conditions (25° C and 50 percent humidity). The cured sheets were removed from mould after 24 hours and kept at ambient temperature for seven days for complete curing.

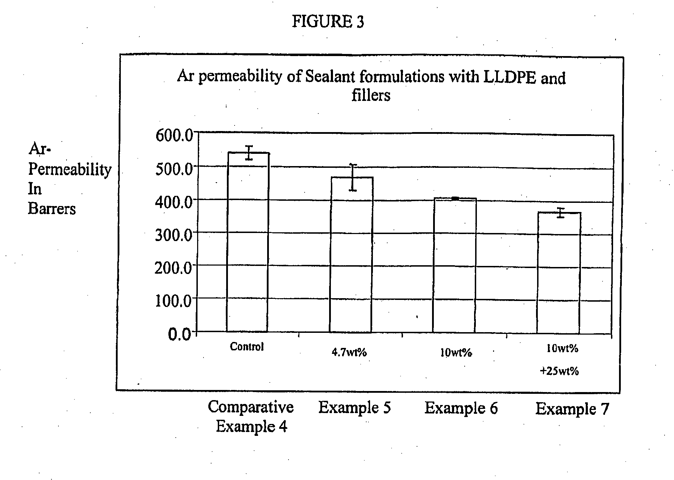

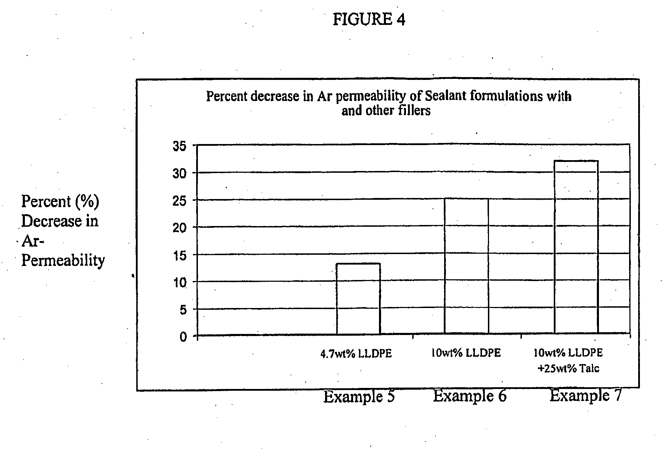

Permeability data of Comparative Example 4, and Examples 5, 6, and 7 with LLDPE and other fillers is displayed in Figures 3 and 4.

As shown in Figures 3 and 4, Examples 5-7 displayed lowered Ar permeability relative to Comparative Example 4.

## Claims

1. An insulated glass unit comprising at least two spaced-apart sheets of glass in spaced relationship to each other, a low thermal conductivity gas therebetween and gas sealant element including a curable sealant composition comprised of
a) diorganopolysiloxane exhibiting permeability to said gas;
b) at least one polymer having a permeability to said gas that is less than the permeability of diorganopolysiloxane polymer, said polymer (b) being selected from the group consisting of low density polyethylene (LDPE), very low density polyethylene (VLDPE), linear low density polyethylene (LLDPE), high density polyethylene (HDPE), polypropylene (PP), polyisobutylene (PIB), polyvinyl acetate (PVAc), polyvinyl alcohol (PVOH), polystyrene, polycarbonate, polyester, such as, polyethylene terephthalate (PET), polybutylene terephthalate (PBT), polyethylene napthalate (PEN), glycol-modified polyethylene terephthalate (PETG); polyvinylchloride (PVC), polyvinylidene chloride, polyvinylidene floride, thermoplastic polyurethane (TPU), acrylonitrile butadiene styrene (ABS), polymethylmethacrylate (PMMA), polyvinyl fluoride (PVF), Polyamides, polymethylpentene, polyimide (PI), polyetherimide (PEI), polether ether ketone (PEEK), polysulfone, polyether sulfone, ethylene chlorotrifluoroethylene, polytetrafluoroethylene (PTFE), cellulose acetate, cellulose acetate butyrate, plasticized polyvinyl chloride, ionomers, polyphenylene sulfide (PPS), styrene-maleic anhydride, modified polyphenylene oxide (PPO), ethylene-propylene rubber (EPDM), polybutadiene, polychloroprene, polyisoprene, polyurethane (TPU), styrene-butadiene-styrene (SBS), styrene-ethylene-butadiene-styrene (SEEBS), and mixture thereof;
c) cross-linker;
d) catalyst for the cross-linker reaction; and
e) a filler which is a clay,
wherein the clay is modified with
(i) an amine compound or ammonium ion having the structure R³R⁴R⁵N, wherein R³, R⁴, and R⁵ are C₁ to C₃₀ alkyls or alkenes, and mixtures thereof, or
(ii) an amine or ammonium ion having the structure R⁶R⁷R⁸N, wherein at least one R⁶, R⁷, and R⁸ is C₁ to C₃₀ alkoxy silanes and the remaining are C₁ to C₃₀ alkyls or alkenes, on
(iii) ammonium, primary alkylammonium, secondary alkylammohium, tertiary alkylammonium, quaternary alkylammonium, phosphonium derivatives of aliphatic, aromatic or arylaliphatic amines, phosphines or sulphides, or sulfonium derivatives of aliphatic, aromatic or arylaliphatic amines, phosphines or sulfides.

2. The insulated glass unit window of Claim 1 wherein the diorganopolysiloxane polymer, component (a), is a silanol terminated diorganopolysiloxane having the formula:
MₐD_{b}D'_{c}
wherein
a = 2,
b is equal to or greater than 1,
c is zero or a positive integer;
M = (HO)_{3-x-y}R¹ₓR²_{y}SiO_{1/2}; wherein x = 0, 1 or 2 and y is either 0 or 1, with the proviso that x + y is less than or equal to 2, R¹ and R² are monovalent C₁ to C₆₀ hydrocarbon radicals;
D = R³R⁴SiO_{1/2}; wherein R³ and R⁴ are monovalent C₁ to C₆₀ hydrocarbon radicals; and
D' = R⁵R⁶SiO_{2/2}; wherein R⁵ and R⁶ are independently chosen monovalent C₁ to C₆₀ hydrocarbon radicals.

3. The insulated glass unit of Claim 1 wherein polymer (b) is selected from the group consisting of low density polyethylene (LDPE), very low density polyethylene (VLDPE), linear low density polyethylene (LLDPE), high density polyethylene (HDPE), and mixtures thereof, preferably from the group consisting of low density polyethylene (LDPE), very low density polyethylene (VLDPE), linear low density polyethylene (LLDPE), and mixture thereof, and is more preferably linear low density polyethylene (LLDPE).

4. The insulated glass unit of Claim 1 wherein the catalyst is a tin catalyst, preferably selected from the group consisting of dibutyltindilaurate, dibutyltindiacetate, dibutyltindimethoxide, tinoctoate, isobutyltintriceroate, dibutyltinoxide, solubilized dibutyl tin oxide, dibutyltin bis-diisooctylphthalate, bis-tripropoxysilyl dioctyltindibutyltin bis-acetylacetone, silylated dibutyltin dioxide, carbomethoxyphenyl tin tris-uberate, isobutyltin triceroate, dimethyltin dibutyrate, dimethyltin di-neodecanoate, triethyltin tartarate, dibutyltin dibenzoate, tin oleate, tin naphthenate, butyltintri-2-ethylhexylhexoate, tinbutyrate, diorganotin bis β-diketonates and mixtures thereof.

5. The insulated glass unit of Claim 3 wherein the adhesion promoter is selected from the group consisting of n-2-aminoethyl-3-aminopropyltrimethoxysilane, 1,3,5-tris(trimethoxysilylpropyl)isocyanurate, γ-aminopropyltriethoxysilane, γ-aminopropyltrimethoxysilane, aminopropyltrimethoxysilane, bis-γ-trimethoxysilypropyl)amine, N-Phenyl-y-aminopropyltrimethoxysilane, triaminofunctionaltrimethoxysilane, γ-aminopropylmethyldiethoxysilane, γ-aminopropylmethyldiethoxysilane, methacryloxypropyltrimethoxysilane, methylaminopropyltrimethoxysilane, γ-glycidoxypropylethyldimethoxysilane, γ-glycidoxypropyltrimethoxysilane, γ-glycidoxyethyltrimethoxysilane, β-(3,4-epoxycyclohexyl)propyltrimethoxysilane, β-(3,4-epoxycyclohexyl) ethylmethyldimethoxysilane, isocyanatopropyltriethoxysilane, isocyanatopropylmethyldimethoxysilane, β-cyanoethyltrimethoxysilane, γ-acryloxypropyltrimethoxysilane, γ-methacryloxypropylmethyldimethoxysilane, 4-amino-3,3-dimethylbutyltrimethoxysilane, n-ethyl-3-trimethoxysilyl-2-methylpropanamine, and mixtures thereof.

6. The insulated glass unit of Claim 1 wherein
(i) the diorganopolysiloxane polymer, component (a), ranges from an amount from 50 weight percent to 99 weight percent of the total composition, preferably from 60 weight percent to 95 weight percent of the total composition, and/or
(ii) the polymer, component (b), ranges from in amount from 1 weight percent to 50 weight percent of the total composition, preferably from 5 weight percent to 40 weight percent of the total composition.

7. The insulated glass unit of Claim 3 wherein the non-ionic surfactant is selected from the group of surfactants consisting of polyethylene glycol, polypropylene glycol, ethoxylated castor oil, oleic acid ethoxylate, alkylphenol ethoxylates, copolymers of ethylene oxide and propylene oxide and copolymers of silicones and polyethers, copolymers of silicones and copolymers of ethylene oxide and propylene oxide and mixtures thereof, preferably from the group of surfactants consisting of copolymers of ethylene oxide and propylene oxide, copolymers of silicones and polyethers, copolymers of silicones and copolymers of ethylene oxide and propylene oxide and mixtures thereof, and is present in an amount ranging from 0.1 weight percent to 10 weight percent of the total composition.

8. The insulated glass unit of Claim 1 wherein the amount of the cross-linker, component (c), ranges in amount from 0.1 weight percent to 10 weight percent of the total composition, and/or the amount of catalyst, component (d), ranges in amount from 0.005 weight percent to 1 weight percent of the total composition.

9. The insulated glass unit of Claim 4 wherein the amount of filler ranges in amount from 0 to 80 weight percent of the total composition, and/or the amount of adhesion promoter ranges in amount from 0.5 weight percent to 20 weight percent of the total composition.

10. The insulated glass unit of Claim 1 wherein the clay is selected from one or more of montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, vermiculite, halloysite, aluminate oxides, hydrotalcite, illite, rectorite, tarosovite, ledikite, and kaolinite.

11. The insulated glass unit of Claim 1 wherein the clay is modified with an amine compound or ammonium ion having the structure R³R⁴R⁵N, wherein R³, R⁴, and R⁵ are C₁ to C₂₀ alkyls or alkenes, and preferably wherein R³ and optionally R⁴ and/or R⁵ are a C₁₄ to C₂₀ alkyl or alkene.

12. The insulated glass unit of Claim 1 wherein the clay is modified with an amine or ammonium ion having the structure R⁶R⁷R⁸N, wherein at least one of R⁶, R⁷ and R⁸ is a C₁ to C₂₀ alkoxy silanes and the remaining are C₁ to C₂₀ alkyls or alkenes.

13. The insulated glass unit of Claim 7 wherein the clay is present in an amount from 0.1 to 50 weight percent of said composition.

14. The insulated glass unit of Claim 1 wherein the cross-linkers (c) is an alkylsilicate having the formula:
(R¹⁴O)(R¹⁵O)(R¹⁶O)(R¹⁷O)Si
where R¹⁴, R¹⁵, R¹⁶ and R¹⁷ are chosen independently from monovalent C₁ to C₆₀ hydrocarbon radicals.

15. The insulated glass unit of Claim 1 wherein the clay particles have a lateral dimension of between 0.01 and 5 µm and a vertical dimension of between 0.5 and 10 nm.

## Patentansprüche

1. Isolierte Glaseinheit mit mindestens zwei voneinander beabstandeten Glasscheiben, die im Abstand zueinander angeordnet sind, einem Gas von geringer Wärmeleitfähigkeit dazwischen und einem Dichtungselement für Gas, das eine härtbare Dichtungsmasse enthält, bestehend aus
a) Diorganopolysiloxan, das Durchlässigkeit für das genannte Gas zeigt;
b) mindestens einem Polymer mit einer Durchlässigkeit für das genannte Gas, die geringer ist als die Durchlässigkeit von Diorganopolysiloxanpolymer, wobei das Polymer (b) aus der aus Polyethylen niedriger Dichte (LDPE), Polyethylen sehr niedriger Dichte (VLDPE), linearem Polyethylen niedriger Dichte (LLDPE), Polyethylen hoher Dichte (HDPE), Polypropylen (PP), Polyisobutylen (PIB), Polyvinylacetat (PVAc), Polyvinylalkohol (PVOH), Polystyrol, Polycarbonat, Polyester, wie zum Beispiel Polyethylenterephthalat (PET), Polybutylenterephthalat (PBT), Polyethylennaphthalat (PEN), glycolmodifiziertem Polyethylenterephthalat (PETG); Polyvinylchlorid (PVC), Polyvinylidenchlorid, Polyvinylidenfluorid, thermoplastischem Polyurethan (TPU), Acrylnitrilbutadienstyrol (ABS), Polymethylmethacrylat (PMMA), Polyvinylfluorid (PVF), Polyamiden, Polymethylpenten, Polyimid (PI), Polyetherimid (PEI), Polyetheretherketon (PEEK), Polysulfon, Polyethersulfon, Ethylenchlortrifluorethylen, Polytetrafluorethylen (PTFE), Celluloseacetat, Celluloseacetatbutyrat, weichgemachtem Polyvinylchlorid, Ionomeren, Polyphenylensulfid (PPS), Styrolmaleinsäureanhydrid, modifiziertem Polyphenylenoxid (PPO), Ethylen-Propylen-Kautschuk (EPDM), Polybutadien, Polychloropren, Polyisopren, Polyurethan (TPU), StyrolButadien-Styrol (SBS), Styrol-Ethylen-Butadien-Styrol (SEEBS) und Mischungen davon bestehenden Gruppe ausgewählt ist;
c) Vernetzer;
d) Katalysator für die Vernetzungsreaktion; und
e) einen Füllstoff, bei dem es sich um einen Ton handelt,
wobei der Ton modifiziert ist mit
(i) einer Aminverbindung oder einem Ammoniumion mit der Struktur R³R⁴R⁵N, wobei R³, R⁴ und R⁵ C₁-C₃₀-Alkyle oder -Alkene sowie Mischungen davon sind, oder
(ii) einem Amin oder Ammoniumion mit der Struktur R⁶R⁷R⁸, wobei es sich bei mindestens einem R⁶, R⁷ und R⁸ um C₁-C₃₀-Alkoxysilane handelt und der Rest C₁-C₃₀-Alkyle oder -Alkene sind, oder
(iii) Ammonium, primärem Alkylammonium, sekundärem Alkylammonium, tertiärem Alkylammonium, quaternärem Alkylammonium, Phosphoniumderivaten von aliphatischen, aromatischen oder arylaliphatischen Aminen, Phosphinen oder Sulfiden oder Sulfoniumderivaten von aliphatischen, aromatischen oder arylaliphatischen Aminen, Phosphinen oder Sulfiden.

2. Fenster mit einer isolierten Glaseinheit nach Anspruch 1, wobei das Diorganopolysiloxanpolymer, Komponente (a), ein silanolterminiertes Diorganopolysiloxan ist mit der Formel:
MₐD_{b}D'_{c}
worin
a = 2,
b gleich oder größer ist als 1,
c Null oder eine positive ganze Zahl ist;
M = (HO)_{3-x-y}R¹ₓR²_{y}SiO_{1/2}; wobei x = 0, 1 oder 2 und y entweder 0 oder 1 ist, mit der Maßgabe, dass x + y kleiner oder gleich 2 ist und R¹ und R² einwertige C₁-C₆₀-Kohlenwasserstoffreste sind;
D = R³R⁴SiO_{1/2}; wobei R³ und R⁴ einwertige C₁-C₆₀-Kohlenwasserstoffreste sind; und
D' = R⁵R⁶SiO_{2/2}; wobei R⁵ und R⁶ unabhängig voneinander gewählte einwertige C₁-C₆₀-Kohlenwasserstoffreste sind.

3. Isolierte Glaseinheit nach Anspruch 1, wobei Polymer (b) aus der aus Polyethylen niedriger Dichte (LDPE), Polyethylen sehr niedriger Dichte (VLDPE), linearem Polyethylen niedriger Dichte (LLDPE), Polyethylen hoher Dichte (HDPE) und Mischungen davon bestehenden Gruppe ausgewählt ist, vorzugsweise aus der aus Polyethylen niedriger Dichte (LDPE), Polyethylen sehr niedriger Dichte (VLDPE), linearem Polyethylen niedriger Dichte (LLDPE) und Mischungen davon bestehenden Gruppe, und mehr bevorzugt lineares Polyethylen niedriger Dichte (LLDPE) ist.

4. Isolierte Glaseinheit nach Anspruch 1, wobei der Katalysator ein Zinnkatalysator ist, vorzugsweise ausgewählt aus der aus Dibutylzinndilaurat, Dibutylzinndiacetat, Dibutylzinndimethoxid, Zinnoctoat, Isobutylzinntriceroat, Dibutylzinnoxid, solubilisiertem Dibutylzinnoxid, Dibutylzinn-bis-diisooctylphthalat, Bistripropoxysilyldicotylzinndibutylzinn-bis-acetylaceton, silyliertem Dibutylzinndioxid, Carbomethoxyphenylzinn-tris-uberat, Isobutylzinntriceroat, Dimethylzinndibutyrat, Dimethylzinn-di-neodecanoat, Triethylzinntartrat, Dibutylzinndibenzoat, Zinnoleat, Zinn-naphthenat, Butylzinn-tri-2-ethylhexylhexoat, Zinnbutyrat, Diorganozinn-bis-β-diketonaten und Mischungen davon bestehenden Gruppe.

5. Isolierte Glaseinheit nach Anspruch 3, wobei der Haftvermittler aus der aus n-2-Aminoethyl-3-aminopropyltrimethoxysilan, 1,3,5-Tris(trimethoxysilylpropyl)-isocyanurat, γ-Aminopropyltriethoxysilan, γ-Aminopropyltrimethoxysilan, Aminopropyltrimethoxysilan, Bis-γ-(trimethoxysilylpropyl)amin, N-Phenyl-γ-aminopropyltrimethoxysilan, triaminofunktionellem Trimethoxysilan, γ-Aminopropylmethyldiethoxysilan, γ-Aminopropylmethyldiethoxysilan, Methacryloxypropyltrimethoxysilan, Methylaminopropyltrimethoxysilan, γ-Glycidoxypropylethyldimethoxysilan, γ-Glycidoxypropyltrimethoxysilan, γ-Glycidoxyethyltrimethoxysilan, β-(3,4-Epoxycyclohexyl)propyltrimethoxysilan, β-(3,4-Epoxycyclohexyl)ethylmethyldimethoxysilan, Isocyanatopropyltriethoxysilan, Isocyanatopropylmethyldimethoxysilan, β-Cyanoethyltrimethoxysilan, γ-Acryloxypropyltrimethoxysilan, γ-Methacryloxypropylmethyldimethoxysilan, 4-Amino-3,3-dimethylbutyltrimethoxysilan, n-Ethyl-3-trimethoxysilyl-2-methyl-propanamin und Mischungen davon bestehenden Gruppe ausgewählt ist.

6. Isolierte Glaseinheit nach Anspruch 1, wobei
(i) das Diorganopolysiloxanpolymer, Komponente (a), in einer Menge im Bereich von 50 Gew.-% bis 99 Gew.-% der Gesamtzusammensetzung, vorzugsweise im Bereich von 60 Gew.-% bis 95 Gew.-% der Gesamtzusammensetzung vorliegt, und/oder
(ii) das Polymer, Komponente (b), in einer Menge im Bereich von 1 Gew.-% bis 50 Gew.-% der Gesamtzusammensetzung, vorzugsweise im Bereich von 5 Gew.-% bis 40 Gew.-% der Gesamtzusammensetzung vorliegt.

7. Isolierte Glaseinheit nach Anspruch 3, wobei das nichtionische Tensid aus der aus Polyethylenglycol, Polypropylenglycol, ethoxyliertem Rizinusöl, Ölsäureethoxylat, Alkylphenolethoxylaten, Copolymeren von Ethylenoxid und Propylenoxid sowie Copolymeren von Siliconen und Polyethern, Copolymeren von Siliconen sowie Copolymeren von Ethylenoxid und Propylenoxid und Mischungen davon bestehenden Gruppe von Tensiden ausgewählt ist, vorzugsweise aus der aus Copolymeren von Ethylenoxid und Propylenoxid, Copolymeren von Siliconen und Polyethern, Copolymeren von Siliconen und Copolymeren von Ethylenoxid und Propylenoxid sowie Mischungen davon bestehenden Gruppe von Tensiden, und in einer Menge im Bereich von 0,1 Gew.-% bis 10 Gew.-% der Gesamtzusammensetzung vorliegt.

8. Isolierte Glaseinheit nach Anspruch 1, wobei die Menge des Vernetzers, Komponente (c), in einem Bereich von 0,1 Gew.-% bis 10 Gew.-% der Gesamtzusammensetzung liegt und/oder die Menge des Katalysators, Komponente (d), in einem Bereich von 0,005 Gew.-% bis 1 Gew.-% der Gesamtzusammensetzung liegt.

9. Isolierte Glaseinheit nach Anspruch 4, wobei die Menge des Füllstoffs in einem Bereich von 0 bis 80 Gew.-% der Gesamtzusammensetzung liegt und/oder die Menge des Haftvermittlers in einem Bereich von 0,5 Gew.-% bis 20 Gew.-% der Gesamtzusammensetzung liegt.

10. Isolierte Glaseinheit nach Anspruch 1, wobei der Ton aus einem oder mehreren von Montmorillonit, Natrium-Montmorillonit, Calcium-Montmorillonit, Magnesium-Montmorillonit, Nontronit, Beidellit, Volkonskoit, Laponit, Hectorit, Saponit, Sauconit, Magadit, Kenyait, Sobockit, Svindordit, Stevensit, Vermiculit, Halloysit, Aluminatoxiden, Hydrotalcit, Illit, Rectorit, Tarosovit, Ledikit und Kaolinit ausgewählt ist.

11. Isolierte Glaseinheit nach Anspruch 1, wobei der Ton mit einer Aminverbindung oder einem Ammoniumion mit der Struktur R³R⁴R⁵N modifiziert ist, wobei R³, R⁴ und R⁵ C₁-C₂₀-Alkyle oder -Alkene sind, und vorzugsweise wobei R³ und optional R⁴ und/oder R⁵ C₁₄-C₂₀-Alkyl- oder -Alken sind.

12. Isolierte Glaseinheit nach Anspruch 1, wobei der Ton mit einem Amin oder Ammoniumion mit der Struktur R⁶R⁷R⁸N modifiziert ist, wobei mindestens eines von R⁶, R⁷ und R⁸ ein C₁-C₂₀-Alkoxysilan ist und der Rest C₁-C₂₀-Alkyle oder -Alkene sind.

13. Isolierte Glaseinheit nach Anspruch 7, wobei der Ton in einer Menge von 0,1 bis 50 Gew.-% der Zusammensetzung vorliegt.

14. Isolierte Glaseinheit nach Anspruch 1, wobei der Vernetzer (c) ein Alkylsilicat ist mit der Formel:
(R¹⁴O)(R¹⁵O)(R¹⁶O)(R¹⁷O)Si
wobei R¹⁴, R¹⁵, R¹⁶ und R¹⁷ unabhängig voneinander aus einwertigen C₁-C₆₀-Kohlenwasserstoffresten gewählt sind.

15. Isolierte Glaseinheit nach Anspruch 1, wobei die Tonpartikel eine seitliche Ausdehnung zwischen 0,01 und 5 µm und eine vertikale Ausdehnung zwischen 0,5 und 10 nm haben.

## Revendications

1. Unité de vitrage isolant comprenant au moins deux carreaux de verre espacés l'un de l'autre selon une relation d'espacement l'un par rapport à l'autre, un gaz à faible conductivité thermique entre eux, et un élément de scellement vis-à-vis d'un gaz, comprenant une composition de scellement durcissable consistant en
a) un diorganopolysiloxane présentant une perméabilité audit gaz ;
b) au moins un polymère ayant une perméabilité audit gaz, qui est inférieure à la perméabilité du polymère diorganopolysiloxane, ledit polymère (b) étant choisi dans le groupe consistant en le polyéthylène basse densité (PEBD), le polyéthylène très basse densité (PETBD), le polyéthylène basse densité linéaire (PEBDL), le polyéthylène haute densité (PEHD), le polypropylène (PP), le polyisobutylène (PIB), le poly(acétate de vinyle) (PVAc), le poly(alcool vinylique) (PVOH), le polystyrène, le polycarbonate, le polyester tel que le poly(téréphtalate d'éthylène) (PET), le poly(téréphtalate de butylène (PBT), le poly(naphtalate d'éthylène) (PEN), le poly(téréphtalate d'éthylène) modifié par un glycol (PETG), le poly(chlorure de vinyle) (PVC), le poly(chlorure de vinylidène), le poly(fluorure de vinylidène), le polyuréthanne thermoplastique (TPU), l'acrylonitrile-butadiène-styrène (ABS), le poly(méthacrylate de méthyle) (PMMA), le poly(fluorure de vinyle) (PVF), les polyamides, le polyméthylpentène, le polyimide (PI), le polyétherimide (PEI), la polyétheréthercétone (PEEK), la polysulfone, la polyéthersulfone, l'éthylène-chlorotrifluoréthylène, le polytétrafluoréthylène (PTFE), l'acétate de cellulose, l'acétobutyrate de cellulose, le poly(chlorure de vinyle) plastifié, les ionomères, le poly(sulfure de phénylène) (PPS), le styrène-anhydride maléique, le poly(oxyde de phénylène) (PPO) modifié, le caoutchouc éthylène-propylène (EPDM), le polybutadiène, le polychloroprène, le polyisoprène, le polyuréthanne (TPU), le styrène-butadiène-styrène (SBS), le styrène-éthylène-butadiène-styrène (SEEBS) et les mélanges de ceux-ci ;
c) un agent de réticulation ;
d) un catalyseur pour la réaction de l'agent de réticulation ; et
e) une charge, qui est une argile
l'argile étant modifiée par
(i) un composé amine ou un ion ammonium ayant la structure R³R⁴R⁵N, dans laquelle R³, R⁴ et R⁵ sont des groupes alkyle ou des alcènes en C₁ à C₃₀, et les mélanges de ceux-ci, ou
(ii) une amine ou un ion ammonium ayant la structure R⁶R⁷R⁸N dans laquelle au moins l'un de R⁶, R⁷ et R⁸ est un alcoxysilane en C₁ à C₃₀, et les autres sont des groupes alkyle ou des alcènes en C₁ à C₃₀, ou
(iii) des dérivés ammonium, alkylammonium primaire, alkylammonium secondaire, alkylammonium tertiaire, alkylammonium quaternaire, phosphonium, d'amines, de phosphines ou de sulfures aliphatiques, aromatiques ou arylaliphatiques, ou des dérivés sulfonium d'amines, de phosphines ou de sulfures aliphatiques, aromatiques ou arylaliphatiques.

2. Fenêtre formant unité de vitrage isolant selon la revendication 1, dans laquelle le polymère diorganopolysiloxane, le composant (a), est un diorganopolysiloxane à terminaison silanol ayant la formule :
MₐD_{b}D'_{c}
dans laquelle
a=2
b est supérieur ou égal à 1,
c vaut zéro ou est un entier positif ;
M = (HO)_{3-x-y}R¹ₓR²_{y}SiO_{1/2}, où x = 0, 1 ou 2 et y vaut 0 ou 1, à la condition que x + y soit inférieur ou égal à 2, R¹ et R² sont des radicaux hydrocarbonés monovalents en C₁ à C₆₀;
D = R³R⁴SiO_{1/2}, où R³ et R⁴ sont des radicaux hydrocarbonés monovalents en C₁ à C₆₀ ; et
D' = R⁵R⁶SiO_{2/2}, où R⁵ et R⁶ sont choisis chacun indépendamment de l'autre parmi les radicaux hydrocarbonés monovalents en C₁ à C₆₀.

3. Unité de vitrage isolant selon la revendication 1, dans laquelle le polymère (b) est choisi dans le groupe consistant en le polyéthylène basse densité (PEBD), le polyéthylène très basse densité (PETBD), le polyéthylène basse densité linéaire (PEBDL), le polyéthylène haute densité (PEHD) et les mélanges de ceux-ci, de préférence dans le groupe consistant en le polyéthylène basse densité (PEBD), le polyéthylène très basse densité (PETBD), le polyéthylène basse densité linéaire (PEBDL) et les mélanges de ceux-ci, et est tout spécialement le polyéthylène basse densité linéaire (PEBDL).

4. Unité de vitrage isolant selon la revendication 1, dans laquelle le catalyseur est un catalyseur à l'étain choisi de préférence dans le groupe consistant en le dilaurate de dibutylétain, le diacétate de dibutylétain, le diméthoxyde de dibutylétain, l'octanoate d'étain, le tricéroate d'isobutylétain, l'oxyde de dibutylétain, l'oxyde de dibutylétain solubilisé, le bis-diisooctylphtalate de dibutylétain, le bis-tripropoxysilyldioctylétain, la dibutylétain-bis-acétylacétone, le dioxyde de dibutylétain silylé, le trisubérate de carbométhoxyphénylétain, le tricéroate d'isobutylétain, le dibutyrate de diméthylétain, le di-néodécanoate de diméthylétain, le tartrate de triéthylétain, le dibenzoate de dibutylétain, l'oléate d'étain, le naphténate d'étain, le tri-2-éthylhexylhexanoate de butylétain, le butyrate d'étain, les bis-β-dicétonates de diorganoétain et les mélanges de ceux-ci.

5. Unité de vitrage isolant selon la revendication 3, dans laquelle le promoteur d'adhérence est choisi dans le groupe consistant en le n-2-aminoéthyl-3-aminopropyltriméthoxysilane, l'isocyanurate de 1,3,5-tris(triméthoxysilylpropyle), le γ-aminopropyltriéthoxysilane, le γ-aminopropyltriméthoxysilane, l'aminopropyltriméthoxysilane, la bis(γ-triméthoxysilylpropyl)amine, le N-phényl-γ-aminopropyltriméthoxysilane, le triméthoxysilane à fonctionnalité triamino, le γ-aminopropylméthyldiéthoxysilane, le γ-aminopropylméthyldiéthoxysilane, le méthacryloxypropyltriméthoxysilane, le méthylaminopropyltriméthoxysilane, le γ-glycidoxypropyléthyldiméthoxysilane, le γ-glycidoxypropyltriméthoxysilane, le γ-glycidoxyéthyltriméthoxysilane, le β-(3,4-époxycyclohexyl)propyltriméthoxysilane, le β-(3,4-époxycyclohexyl)éthylméthyldiméthoxysilane, l'isocyanatopropyltriéthoxysilane, l'isocyanatopropylméthyldiméthoxysilane, le β-cyanoéthyltriméthoxysilane, le γ-acryloxypropyltriméthoxysilane, le γ-méthacryloxypropylméthyldiméthoxysilane, le 4-amino-3,3-diméthylbutyltriméthoxysilane, la n-éthyl-3-triméthoxysilyl-2-méthylpropanamine, et les mélanges de ceux-ci.

6. Unité de vitrage isolant selon la revendication 1, dans laquelle
(i) le polymère diorganopolysiloxane, le composant (a), est présent en une quantité comprise dans la plage de 50 % en poids à 99 % en poids par rapport à la composition totale, de préférence de 60 % en poids à 95 % en poids par rapport à la composition totale, et/ou
(ii) le polymère, le composant (b), est présent en une quantité comprise dans la plage de 1 % en poids à 50 % en poids par rapport à la composition totale, de préférence de 5 % en poids à 40 % en poids par rapport à la composition totale.

7. Unité de vitrage isolant selon la revendication 3, dans laquelle le tensioactif non ionique est choisi dans le groupe des tensioactifs consistant en le polyéthylèneglycol, le polypropylèneglycol, l'huile de ricin éthoxylée, les produits d'éthoxylation de l'acide oléique, les produits d'éthoxylation des alkylphénols, les copolymères d'oxyde d'éthylène et d'oxyde de propylène et les copolymères de silicones et de polyéthers, les copolymères de silicones et les copolymères d'oxyde d'éthylène et d'oxyde de propylène et les mélanges de ceux-ci, de préférence dans le groupe de tensioactifs consistant en les copolymères d'oxyde d'éthylène ou d'oxyde de propylène, les copolymères de silicones et de polyéthers, les copolymères de silicones et de copolymères d'oxyde d'éthylène et d'oxyde de propylène et les mélanges de ceux-ci, et est présent en une quantité comprise dans la plage de 0,1 % en poids à 10 % en poids par rapport à la composition totale.

8. Unité de vitrage isolant selon la revendication 1, dans laquelle la quantité de l'agent de réticulation, le composant (c), est comprise dans la plage de 0,1 % en poids à 10 % en poids par rapport à la composition totale, et/ou la quantité du catalyseur, le composant (d) est comprise dans la plage de 0,005 % en poids à 1 % en poids par rapport à la composition totale.

9. Unité de vitrage isolant selon la revendication 4, dans laquelle la quantité de la charge est comprise dans la plage de 0 à 80 % en poids par rapport à la composition totale, et/ou la quantité du promoteur d'adhérence est comprise dans la plage de 0,5 % en poids à 20 % en poids par rapport à la composition totale.

10. Unité de vitrage isolant selon la revendication 1, dans laquelle l'argile est choisie parmi un ou plusieurs de la montmorillonite, de la montmorillonite chargée au sodium, de la montmorillonite chargée au calcium, de la montmorillonite chargée au magnésium, de la nontronite, de la béidellite, de la volkonskoïte, de la laponite, de l'hectorite, de la saponite, de la sauconite, de la magadite, de la kenyaïte, de la sobockite, de la svindordite, de la stévensite, de la vermiculite, de l'halloysite, des oxydes-aluminates, de l'hydrotalcite, de l'illite, de la rectorite, de la tarosovite, de la lédikite et de la kaolinite.

11. Unité de vitrage isolant selon la revendication 1, dans laquelle l'argile est modifiée avec un composé amine ou un ion ammonium ayant la structure R³R⁴R⁵N dans laquelle R³, R⁴ et R⁵ sont des groupes alkyle ou des alcènes en C₁ à C₂₀, et de préférence dans laquelle R³ et en option R⁴ et/ou R⁵ sont des groupes alkyle ou des alcènes en C₁₄ à C₂₀.

12. Unité de vitrage isolant selon la revendication 1, dans laquelle l'argile est modifiée avec une amine ou un ion ammonium ayant la structure R⁶R⁷R⁸N dans laquelle au moins l'un de R⁶, R⁷ et R⁸ est un alcoxysilane en C₁ à C₂₀, et les autres sont des groupes alkyle ou des alcènes en C₁ à C₂₀.

13. Unité de vitrage isolant selon la revendication 7, dans laquelle l'argile est présente en une quantité de 0,1 à 50 % en poids par rapport à ladite composition.

14. Unité de vitrage isolant selon la revendication 1, dans laquelle l'agent de réticulation (c) est un silicate d'alkyle de formule :
(R¹⁴O)(R¹⁵O)(R¹⁶O)(R¹⁷O)Si
dans laquelle R¹⁴, R¹⁵, R¹⁶ et R¹⁷ sont choisis chacun indépendamment des autres parmi les radicaux hydrocarbonés monovalents en C₁ à C₆₀.

15. Unité de vitrage isolant selon la revendication 1, dans laquelle les particules d'argile ont une dimension latérale comprise entre 0,01 et 5 µm et une dimension verticale comprise entre 0,5 et 10 nm.
